Europäisches Patentamt

European Patent Office

Office européen des brevets

(11) Veröffentlichungsnummer: **0 239 780**
A2

## (12) EUROPÄISCHE PATENTANMELDUNG

(21) Anmeldenummer: 87102523.5

(22) Anmeldetag: 23.02.87

(51) Int. Cl.³: **G 05 B 19/04**

(30) Priorität: 28.02.86 DE 3606518

(43) Veröffentlichungstag der Anmeldung:
07.10.87 Patentblatt 87/41

(84) Benannte Vertragsstaaten:
BE DE GB SE

(71) Anmelder: Licentia Patent-Verwaltungs-GmbH
Theodor-Stern-Kai 1
D-6000 Frankfurt/Main 70(DE)

(72) Erfinder: Faust, Karl-Heinz
Am Zollstock 17
D-6200 Wiesbaden(DE)

(74) Vertreter: Lertes, Kurt, Dr. et al,
Licentia Patent-Verwaltungs-GmbH Theodor-Stern-Kai 1
D-6000 Frankfurt/M 70(DE)

(54) Verfahren zur Erfassung und Meldung von Fehlern und Ursachen für Störungen im Ablauf von durch Automatisierungsmittel gesteuerten oder geregelten Prozessen.

(57) Gegenstand der Erfindung ist ein Verfahren zur Erfassung und Meldung von Fehlern und Ursachen für Störungen im Ablauf von durch Automatisierungsmittel gesteuerten oder geregelten Prozessen, die aus aufeinanderfolgenden Schritten bestehen. Mittels zyklischer Taktketten werden Gröben des jeweiligen Prozesses und des Automatisierungsgeräts auf das Vorhandensein vorgegebener Werte überwacht. Im Falle einer Störung wird die Taktkette an ihrem der jeweilgen Größe zugeordneten Glied angehalten. Es wird eine entsprechende Meldung erzeugt und die Störung als Fehler in einem Fehlerspeicher registriert, dessen auf den Felher bezogener Inhalt zusammen mit dem Fehler zugeordneten Information bei Abruf auf einem Bildschirm dargestellt werden.

Fig. 1

EP 0 239 780 A2

Croydon Printing Company Ltd.

Licentia Patent-Verwaltungs-GmbH     /1
Theodor-Stern-Kai 1
D-6000 Frankfurt 70

P 36 06 518.8-32

Verfahren zur Erfassung und Meldung von Fehlern und Ursachen für
 Störungen im Ablauf von durch Automatisierungsmittel
 gesteuerten oder geregelten Prozessen

Die Erfindung bezieht sich auf ein Verfahren zur Fehlererkennung und
Fehlerdiagnose bei durch speicherprogrammierbare Automatisierungsmittel gesteuerten oder geregelten Prozessen, die aus nacheinander
ablaufenden Schritten bestehen, die von Ausgabegrößen der Automatisierungsmittel weiterschaltbar sind, wobei einerseits Ausgangsgrößen
des Prozesses je über einen Eingang in einen Signalspeicher des
jeweiligen Automatisierungsmittels eingegeben werden und andererseits
die Ausgabegrößen je über Signalspeicher und einen nachgeschalteten
Ausgang dem Prozeß zugeführt werden.

            Fertigungsprozesse vollziehen sich
 häufig in Schritten, die z. B. Fahr- und Hubbewegungen, Be- und
 Entladungsvorgänge, Bearbeitungs- und Montiervorgänge und dergl.
 umfassen. Die Arbeitsabläufe setzen sich hierbei aus einzelnen,
 zeitlich aufeinanderfolgenden Schritten zusammen, die durch ein
 Automatisierungsmittel mittels eines Programms gesteuert werden, das
 auf die Schritte abgestimmte Taktketten enthält. Das Ende eines
 Prozeßschritts wird dem Automatisierungsmittel über Meßgeräte,
 Initiatoren, Endschalter und dergl. gemeldet. Die entsprechenden
 Signale werden im Programm verknüpft. Bei einem bestimmten Ergebnis
 der Verknüpfung wird über ein weiteres Glied der Taktkette der
 nächste Prozeßschritt eingeleitet.

Wenn eine oder mehrere Bedingungen für die Herstellung eines gewünschten Verknüpfungsergebnisses fehlen, verharrt das Automatisierungsmittel in dem jeweiligen Glied einer Taktkette, so daß ein
Fehler im Prozeß festgestellt werden kann. Es können auch Fehler im
Automatisierungsmittel selbst auftreten, die eine Unterbrechung in
der Aufeinanderfolge der Glieder einer Taktkette hervorrufen.

Da hiermit u. U. Unterbrechungen des Prozesses verbunden sind, ist
eine schnelle Lokalisierung und Behebung der Fehler oder Störungen
notwendig. Es müssen daher Einrichtungen vorhanden sein, die eine
schnelle Fehlererkennung, Fehlerlokalisierung und Feststellung von
Art und Stelle fehlender Größen für die Verknüpfung ermöglichen.

Der Erfindung liegt die Aufgabe zugrunde, für die Erfassung und
Meldung von Fehlern und Ursachen für Unterbrechungen im Ablauf von
durch Automatisierungsmittel gesteuerten oder geregelten Prozessen
ein Verfahren zu entwickeln, das eine schnelle Erkennung und Lokalisierung von Störungen ohne ein durch Hardware realisiertes Übersichtsschaltbild der für die Durchführung des Prozesses vorhandenen
Anlagenteile zuläßt.

Die Aufgabe wird erfindungsgemäß durch die im Anspruch 1 beschriebenen Maßnahmen gelöst. Mit dem Verfahren gemäß dem Anspruch 1
können Anlagenfehler, Fehler im Automatisierungsgerät und fehlende
Bedingungen für den weiteren Ablauf des Prozesses über einen Bildschirm schnell und einfach festgestellt und lokalisiert werden. Es
sind daher keine aufwendigen Tableaus mit Übersichtsschaltbildern
der verschiedenen Anlagenkomponenten für die Druchführung und
Überwachung des Prozesses erforderlich. Fehler der Steuerungs- und
Regelungseinrichtungen sowie die Ursachen der Prozeßunterbrechungen
lassen sich schnell feststellen und anzeigen. Auf dem Bildschirm
werden zu den jeweiligen Störungen zusätzlich Informationen angezeigt, die sich auf die Art und den Ort des Fehlers beziehen können.

Vorzugsweise sind die Booleschen Verknüpfungen durch Parametrierung aus einem standardisierten Booleschen Verknüpfungsbaustein gebildet, der ausgangsseitig eine ODER-Verknüpfung aufweist, der UND-Verknüpfungen vorgeschaltet sind, von denen wenigstens eine eine vorgeschaltete ODER-Verknüpfung aufweist, der weitere UND-Verknüpfungen vorgeschaltet sind. Ein derartiger Boolescher Verknüpfungsbaustein stellt einen Funktionsbaustein dar, dessen Größe je nach Bedarf durch Parametrierung ausgewählt wird. Die Parameter sind in einer gespeicherten Parameterliste enthalten, die mit einem Interpreter verarbeitet wird. Jeder Verknüpfungsbaustein wird seriell verarbeitet. Die Bearbeitung wird zweckmäßigerweise dann abgebrochen, wenn das Ergebnis nicht mehr durch die weitere Bearbeitung beeinflußt werden kann.

Der standarisierte Verknüpfungsbaustein wird vorzugsweise für die Ausgabe von Ausgabegrößen und/oder in Schrittketten als Fortschaltlogik eingesetzt. Wenn innerhalb der Schrittkette die jeweilige Fortschaltbedingung eines Verknüpfungsbausteins erfüllt ist, wird auf den nachfolgenden Schritt übergegangen.

Bei einer zweckmäßigen Ausführungsform ist vorgesehen, daß mittels zyklischer Taktketten Größen des jeweiligen Prozesses und des Automatisierungsgeräts auf das Vorhandensein vorgegebener Werte überwacht werden, daß im Falle einer Störung die Taktkette an ihrem der jeweiligen Größe zugeordneten Glied angehalten wird und daß eine entsprechende Meldung erzeugt und die Störung als Fehler in einem Fehlerspeicher registriert wird, dessen auf den Fehler bezogener Inhalt zusammen mit dem Fehler zugeordneten Informationen bei Abruf auf einem Bildschirm dargestellt werden.

Bei einem Fehler wird durch Betätigung einer Taste einer Tastatur aus dem Fehlerspeicher eine dem jeweils gestörten Verknüpfungsbaustein zugeordneter Schaltplan unter Markierung der fehlerhaften Ausgangsgröße abgerufen und auf dem Bildschirm dargestellt werden. Bei der gestörten Ausgangsgröße ist vorzugsweise eine Zuordnugnsliste auf dem Bildschirm einschließlich Kommentaren darstellbar. Bei dem Schaltplan handelt es sich z.B. um einen Klemmenplan. Anhand der Signalbezeichnung und des Klemmenplans ist eine genaue Identifizierung der Fehlerart und des Fehlerorts möglich, so daß am Fehlerort rasch nach den Ursachen gesucht werden kann. Vorzugsweise werden Verfahrensschritte auf maximal zulässige Ablaufzeiten überwacht, bei deren Überschreiten eine entsprechende Meldung auf dem Bildschirm unter gleichzeitiger Speicherung im Fehlerspeicher erzeugt wird. Es ist dann möglich, die Taktkette, die zu unzulässig langen Prozeßschritten führt, mit Hilfe von Bildschirmanzeigen eingehender zu prüfen, indem z. B. mittels Betätigung von Tasten der Tastatur für die verschiedenen Ein- und Ausgangssignale der Klemmenplan, die Signalbezeichnung und der Stromblaufplan von Speichern abgerufen und auf dem Bildschirm dargestellt werden.

Es ist zweckmäßig, durch Quittierung auf einer Taste, die Fehlermeldung auf dem Bildschirm und im Fehlerspeicher zu löschen, wenn der Fehler nur vorübergehend vorhanden war.

Die Erfindung wird im folgenden an Hand eines in einer Zeichnung dargestellten Ausführungsbeispiels näher erläutert, aus dem sich weitere Merkmale sowie Vorteile ergeben.

Es zeigen

Figur 1     im Schema einzelne Glieder einer Kette zur Ablaufsteuerung,

Figur 2     Einzelheiten der in Figur 1 dargestellten Anordnung,

Figur 3     ein Schema einer kompletten Kette zur Ablaufsteuerung.

Figur 4     eine Übersicht über verschiedene Speicherbereiche in einem Automatisierungsgerät,

Figur 5     ein Teil eines Verdrahtungsplans.

Eine nicht näher dargestellte speicherprogrammierbare Steuerung wird als Automatisierungsgerät zur Ablaufsteuerung eines Prozesses eingesetzt, bei dem es sich z. B. um einen serielle Bewegungsvorgänge aufweisenden Fertigungsprozeß handelt. Derartige Prozesse treten z. B. beim Betrieb von Schweißmaschinen, Rundtischen, Schweißstraßen, Pressenstraßen, Druckgießmaschinen, Lackieranlagen, Formanlagen und dergl. auf. Das Automatisierungsgerät enthält einen Bildschirm. Mit dem Automatisierungsgerät lassen sich folgende Funktionen ausüben:

- Abläufe steuern,
- Verriegelungen steuern,
- Überwachen des Steuerungsablaufs und der Prozeßperipherie,
- Anzeigen aller Signalzustände (Eingänge, Ausgänge, Funktionsglieder,
- Anzeigen von Programmschritten, Zählerständen, Laufzeiten, Parametern, Programmketten, Verknüpfungen,
- Zustandsänderung,
- Anwenderprogramme eingeben und rückdarstellen,
- Kommentare für alle internen und externen Signale,
- Kommentare für alle Verknüpfungsbausteine,
- Dokumentation,
- Fehlerdiagnose,
- Handbetrieb über Bildschirm.

Das Automatisierungsgerät enthält einen Signalspeicher für die Speicherung von Ausgangsgrößen des Prozesses, z.B. Schalterstellungen, und von Ausgabegrößen, die dem Prozeß zur Beeinflussung von Stellgliedern zugeführt werden. Im Automatisierungsgerät sind Programme gespeichert, die zu Taktketten zusammengefaßt sind. Die Taktketten steuern und überwachen den Ablauf des einzelne Schritte aufweisenden Prozesses. Aufgrund ihrer prinzipiellen Übereinstimmungen bilden die Taktketten eine Taktablaufebene. Die von den Taktketten erzeugten Signale werden in einer durch die Schritte des Prozesses bestimmten Weise logisch miteinander verknüpft und danach an Ausgänge gelegt, an die Stellelemente für den Prozeß angeschlossen sind. Die Maßnahmen zur logischen Verknüpfung der von den Taktketten erzeugten Signale bilden die Ausgangsebene.

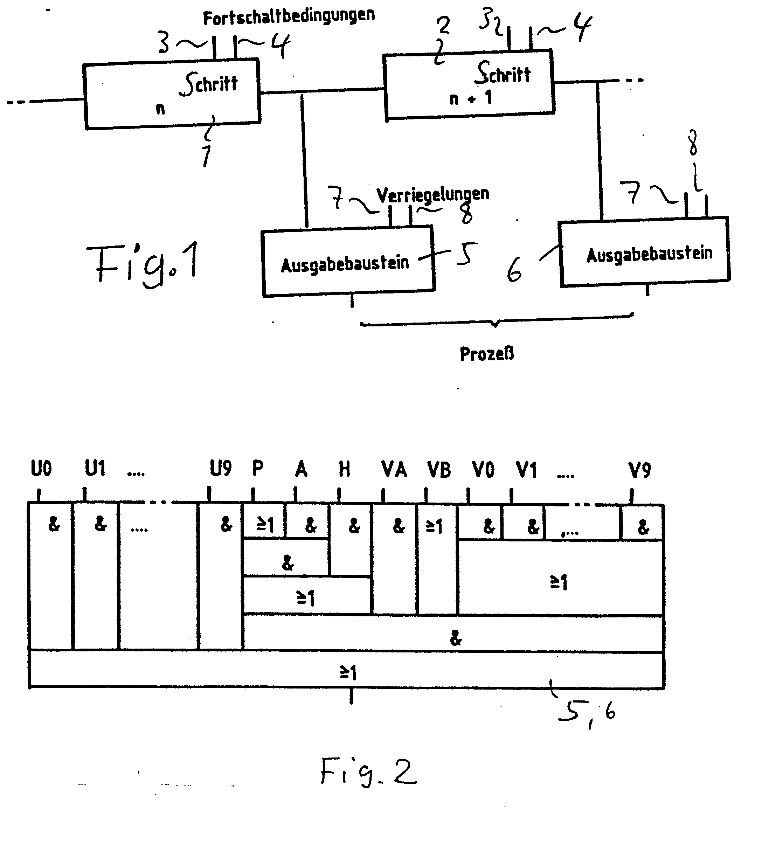

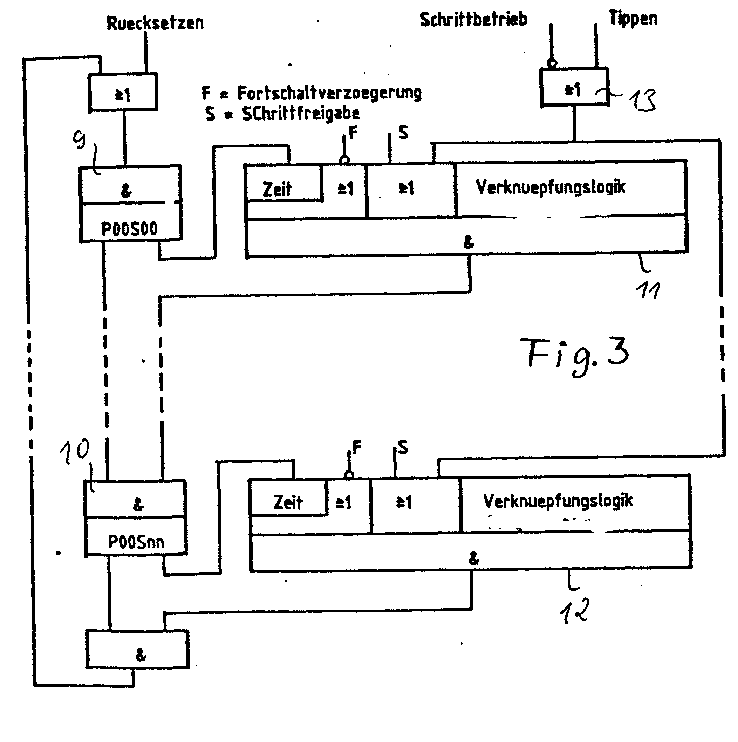

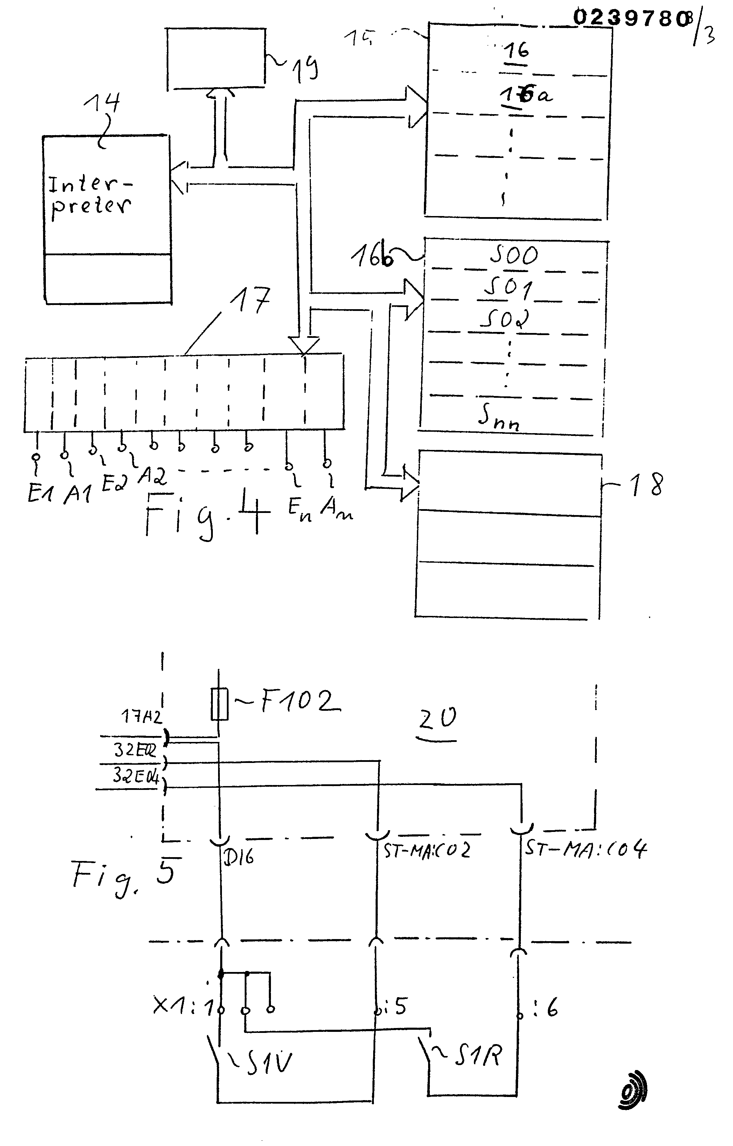

In Figur 1 sind für eine Taktkette zwei Glieder 1, 2 dargestellt. Damit ein Glied einer Taktkette ausgeführt wird, müssen häufig Fortschaltbedingungen vorhanden sein, die z. B. an Eingängen 3, 4 als Signale mit bestimmten logischen Wertigkeiten anliegen müssen. Durch jedes Glied 1, 2 wird ein Signal erzeugt, das einerseits das nächste Glied anstößt, wenn die Fortschaltbedingungen vorliegen, und andererseits jeweils einen Ausgabebaustein 5, 6 beaufschlagt, der weitere Eingänge 7, 8 enthält, deren Signale in einer durch den jeweiligen Baustein vorgegebenen Weise miteinander verknüpft werden. Die Ausgabebausteine 5, 6 erzeugen Signale, die als Ausgabegrößen den Prozeß beeinflussen, d.h. an Stellglieder wie Magnetventile, Motore usw., gelegt sind.

In Figur 2 ist ein standardisierter Funktionsbaustein, der z.B. als Ausgabebaustein 5, 6 verwendet wird, im einzelnen dargestellt.

7

Der Ausgabebaustein 5, 6 enthält z. B. bis zu 25 verschiedene Funktionsglieder, die in Figur 2 mit U0 bis U9, P, A, H, VA, VB, VO und V1 bis V9 bezeichnet sind. Während die Zahl der Funktionsglieder variabel ist, liegt ihr Aufbau fest. Jedes Funktionsglied hat eine Reihe von Eingängen. Die vom Ausgabebaustein 5, 6 durchgeführten Verknüpfungen, nämlich UND (&) und ODER ($\geqslant$ 1) Verknüpfungen sind in Figur 2 für die verschiedenen Ebenen des Ausgabebausteins 5, 6 dargestellt. Die Ausgabebausteine sind vorzugsweise für folgende Anwendungen konzipiert:

| Funktionsglied U0 - U9 | - einfache UND-/ODER-Verknüpfung, Selbsthalteschaltung |
|---|---|
| P | - Takteingang |
| A | - Automatik- bzw. Taktfreigabe |
| H | - Handfreibage |
| VA, VB, VO - V9 | - Verriegelungen für Funktionsglieder A - H. |

Die Funktionsglieder A, H, VA, VB und VO - V9 können nur dann programmiert werden, wenn das davorliegende Gatter P bereits existiert, d. h. mit mindestens einem Eingangssignal belegt ist. Das System arbeitet die Eingänge der Verknüpfungslogik von links nach rechts, also bei U0 oder P beginnend, ab. Die Bearbeitung wird dann abgebrochen, wenn das Ergebnis nicht mehr durch die weitere Bearbeitung beeinflußt werden kann.

Jeder Ausgang kann zusätzlich mit einer Fortschaltverzögerung programmiert werden, d. h. über die Eingangslogik wird ein Zeitzähler gestartet, nach Ablauf der Ausgang gesetzt und über die Eingangslogik unverzögert wieder rückgesetzt.

Die Figur 3 zeigt eine geschlossene Taktkette mit den Gliedern 9, 10 am Beginn und am Ende, sowie Verknüpfungsgliedern 11, 12, die von den Gliedern 9, 10 beaufschlagt werden. Durch unmittelbare Beeinflussung der Verknüpfungsglieder 11, 12 mit über die Tastatur an einen ODER-Baustein 13 gelegten Signalen ist ein Schrittbetrieb sowie ein Tippen möglich. Im Automatisierungsgerät können Taktketten parallel ablaufen.

8

Das System kann bis zu 100 parallel arbeitende Taktketten mit jeweils bis zu 100 Schritten steuern. Sind innerhalb der Fortschaltlogik die Fortschaltbedingungen eines Taktschrittes erfüllt, wird der Folgeschritt gesetzt. Nach Beenden des letzten Schrittes wird die Taktkette auf Schritt 0 rückgesetzt.

Die einzelnen Taktketten werden von P00 bis maximal P99 fortlaufend numeriert. Die einzelnen Schritte werden von S00 bis maximal S99 numeriert.
Jeder Taktschritt erhält die gleiche Verknüpfungslogik wie die Ausgabebausteine. Die Fortschaltbedingungen der Taktschritte werden vorwiegend über Funktionsglieder U0 - U9 realisiert.

Jeder Taktschritt kann zeitüberwacht werden. Sollte nach Ablauf dieser Zeit der anstehende Schritt nicht weitergeschaltet werden, erfolgt eine automatische Registrierung des anstehenden Schrittes und der fehlenden Fortschaltbedingungen. Über das Signal Fortschaltverzögerung kann diese Zeit zusätzlich als Fortschaltverzögerung verwendet werden.

Eine weitere Fortschaltbedingung ist die Schrittfreigabe bzw. die Tipptaste im Schrittbetrieb. Taktschritte, die nicht über den Eingang Schrittfreigabe freigegeben sind, werden im Schrittbetrieb angehalten und nur bei Betätigen der Tipptaste um einen Schritt weitergetaktet.

Das Automatisierungsgerät arbeitet zyklisch, d. h. nacheinander, immer wiederkehrend folgende Funktionen durchgeführt:

- Einlesen der Ausgangssignale des Prozesses und Abspeichern im SIGNAL-Speicher

- Bearbeiten des Anwenderprogramms, Ablegen von Zwischenergebnissen und Ausgabesignalen im SIGNAL-Speicher

- Ausgabe der Signale aus dem SIGNAL-Speicher an die Ausgangs-Bausteine

- Prüfen der wichtigsten Geräte- sowie Programmfunktionen durch die
Zentraleinheit nach jedem Bearbeitungszyklus und Meldung über
einen potentialfreien Kontakt im Fehlerfall

Taktketten werden auch     zum Prüfen von Fehlermeldeeinrichtungen
sowohl im Prozeß als auch im Automatisierungsgerät verwendet. Wenn
ein Fehler festgestellt wird, dann wird automatisch ein Programmteil
wirksam, durch das die Taktkette, die von dem Fehler beeinflußt wird,
auf dem Bildschirm in Form des entsprechenden Befehls dargestellt
wird. Das gleiche tritt auf, wenn ein Schritt wegen einer fehlenden
Bedingung nicht ausgeführt werden kann.

Die Störung wird zugleich in einem Fehlerspeicher registriert. Ein im
Automatisierungsgerät gespeicherter Interpreter steuert und bedient
den Fehlerspeicher nach gleichen Kriterien. Der Interpreter befindet
sich beispielsweise in einem Bereich 14 eines ROM des Automatisierungsgeräts. In einem Bereich 15 z.B. beines RAM befinden sich die
parametrierten Funktionsbausteine 16, 16a usw. Ein weiterer Bereich
16b z.B. des RAM enthält Anweisungen über die Taktketten P00 bis Pnn
und die einzelnen Schritte der Taktketten S00 bis Snn. Ein Signalspeicher 17 ist für die Eingabe von Ausgangsgrößen aus dem Prozeß und
für die Ausgabegrößen bestimmt. Der Signalspeicher 17 weist z.B. für
jede Ausgangsgröße und jedes Ausgabegröße einen gesonderten Speicherplatz auf. Ein zusätzlicher Bereich 18 des RAM wird als Fehlerspeicher verwendet.

Der Interpreter verknüpft die im Signalspeicher 17 enthaltenen
Ausgangsgrößen des Prozesses anhand der im Bereich 14 gespeicherten
Funktionsbausteine. Falls ein Funktionsbaustein unmittelbar für eine
Ausgabegröße verwendet wird, veranlaßt der Interpreter die Abspeicherung des Ergebnisses der Verküpfung im Signalspeicher 17.
Weiterhin führt der Interpreter die Verknüpfungen und die Weiterschaltung der Schritte und Taktketten auf die im Bereich 16 angegebene Weise durch. Der Signalspeicher 17 ist mit Ein- und Ausgängen E1 bis En und A1 bis An des Automatisierungsmittels verbunden, denen jeweils Adressen zugeordnet sind.

Im Bereich 15 sind zu den Funktionsbausteinen 16, 16a auch Angaben über einen als Tabelle abgelegten Schaltplan und über weitere auf die jeweils zu verknüpfenden Größen und auf das Ergebnis der Verknüpfung bezogene Informationen enthalten. Der Schaltplan selbst und die weiteren Informationen sind z.B. in einem Bereich 19 eines RAM des Automatisierungsgeräts abgespeichert. Ein Teil eines solchen Schaltplans ist unter Zuordnung zu den tabellarischen Angaben in Fig. 5 dargestellt.

Ein Automatisierungsgerät 20 hat z.B. die mit 17A2, 32E02 und 32E04 bezeichneten Ein- bzw. Ausgänge, die an Klemmen D16, ST-MA:C02 und ST-MA:C04 eines Schaltschranks gelegt sind. Von diesen Klemmen führen jeweils Leitungen zu Klemmen X1:1, X1:2, X1:5 und X1:6 von Geräten des zu steuernden Prozesses. An die Klemmen X1:1, X1:2, X1:5 und X1:6 sind z.B. Arbeitskontakte S1V und S1R eines Relais oder Schütz in einem Förderer angeschlossen. Die in Fig.5 dargestellte Sicherung hat z.B. die Bezeichnung F102.

Abgespeichert ist der Schaltplan gemäß Fig.5 wie folgt:
Ein-/Ausgänge

| 17A2 | F102 | Sicherung für X1 X1:1 | ST-MA:D16 |
| 3202 | S1V | Förderer X1:6 | ST-MA:C02 |
| 3204 | S1R | Förderer X1:6 | ST-MA:C04 |

Bei einr Fehlerfeststellung oder einer über ein Eingabegerät erzeugten Diagnoseanforderung werden die für den entsprechenden Funktionsbaustein vorgesehenen Verknüpfungen erneut durchgeführt. Der Status der zu verknüpfenden Größen und der Ausgabegröße wird im Fehlerspeicher abgespeichert. Die fehlerbehafteten Ausgangsgrößen werden markiert und auf dem Bildschirm dargestellt. Die Darstellung kann so erfolgen, daß zu einem Signalnamen, der der fehlerbehafteten Ausgangsgröße zugeordnet ist, der binäre Wert zusammen mit Hinweisen auf den jeweiligen Funktionsbaustein und die anzuwählende Speicherstelle mit dem Schaltplan dargestellt wird. Ein Funktionsbaustein wird z.B. wie folgt auf dem Bildschirm dargestellt:

```
Signal  019A02     K1V     Förderer
Valenz  00

                           Laufzeit
 ┌───┬─────────┐
 │   │    &    │  -U0    1   2   3   4
 │ V ├──┬──┬──┬──┤
 │   │& │V │& │V │  - P
 └───┴──┴──┴──┴──┘
```

Es wird in der ersten Zeile die Bezeichnung des Ausgangs, daneben die symbolische Signalbezeichnung und die genaue Bezeichnung angegeben. In der zweiten Zeile wird die binäre Wertigkeit des Signals, bei dem es sich z.B. um eine Ausgabegröße handelt, dargestellt. Ferner werden die Anzahl der auszuführenden Schritte angegeben, die der Funktionsbaustein benötigt, um die neben dem Übersichtschaltbild des Funktionsbausteins erwähnten Eingangsgrößen zu verknüpfen. Die Wertigkeit der Eingangsgrößen wird ebenfalls mitgeteilt.

Wenn die Fehlerfeststellung durch wiederholte Ausführung der Verknüpfungsoperationen ergibt, daß kein Fehler vorliegt, werden die Statussignale im Fehlerspeicher wieder gelöscht. Es folgt dann keine Anzeige.

Es können auch Schrittketten nur zur Diagnose für die Prüfung von Signalen verwendet werden. Diese Schrittketten, die keine Ausgabegrößen erzeugen, können als Meldeketten bezeichnet werden.

Die og. Zuordnungsliste wird bedarfsweise eingeblendet. Der Fehlerspeicher kann durch Betätigung einer entsprechenden Taste angewählt werden. Hierbei wird der fehlerhafte Baustein angezeigt. Falls mehrere fehlerhafte Bausteine im Fehlerspeicher registriert sind, wird bei der Anwahl der erste Baustein angezeigt. Es wird das Schaltbild des Bausteins auf dem Schirm dargestellt, wobei die nicht erfüllten Signalbedingungen invers angezeigt werden.

0239780

Jedem Schritt ist in einem Speicher ein Kommentarfeld zugeordnet, das bei einer Störung angezeigt wird. Dieses Kommentarfeld enthält vorzugsweise Zusatzinformationen, die sich auf die zur Behebung der Störung notwendigen Maßnahmen beziehen. Gewisse Maßnahmen werden auch bei sehr weitreichender Automatisierung zweckmäßigerweise noch von Hand vorgenommen. Beispielsweise ist es günstig, Schutzgitter an bestimmten Maschinen von Hand zu schließen. In der Zusatzinformation ist dann z. B. ein Hinweis "Schutzgitter schließen" unter Bezug auf eine bestimmte Maschine vorhanden. Falls das Schutzgitter geschlossen wird, ist die Störung beseitigt, so daß der Ablauf der Taktketten fortgesetzt wird.

Ein Cursor kann über eine entsprechende Taste auf die einzelnen Signalbedingungen gesetzt werden. Auf dem Bildschirm wird dann die aktuelle Valenz des Signals und ein Zusatzkommentar dargestellt. Nach Anwahl der letzten fehlenden Bedingungen wird mit der Taste auf den zweiten registrierten Baustein übergegangen. Hieran schließt sich dann in gleicher Weise wie oben für die ersten beiden Bausteine angegeben die Anzeige weiterer fehlerhafter Bausteine an. Die Anzeige der Störung schließt auch den Klemmenplan ein, so daß die Störung schnell und einfach lokalisiert werden kann.

Durch Betätigung einer Quittungstaste werden im Fehlerspeicher diejenigen Bausteine gelöscht, deren Fehler beseitigt ist. Eine automatische Quittierung mit Hilfe des Programms ist möglich. Die noch registrierten fehlerhaften Bausteine rücken um die Stelle des gelöschten Bausteins auf.

Wenn für einen Schritt eine Laufzeitüberschreitung festgestellt wird, erfolgt eine Störungsanzeige auf dem Bildschirm. Die Störung wird quittiert, wenn auf das nächste Glied der Taktkette weitergeschaltet wird.

Bei einer Störungsanzeige kann auch auf eine manuelle Überwachung übergegangen werden. Hierzu ist eine besondere Taste vorgesehen. Nach der Umschaltung werden alle Eingangsbedingungen des jeweiligen Bausteins auf ihre aktuelle Valenz abgefragt. Wenn eine oder mehrere Bedingungen nicht erfüllt sind, dann wird der Baustein mit den fehlenden Bedingungen auf dem Bildschirm dargestellt. Der Cursor kann über eine Taste auf den nächsten Fehler eingestellt werden.

Mit den Taktketten lassen sich also Größen sowohl des jeweiligen Prozesses als auch des Automatisierungsgeräts überwachen. Im Falle einer Störung, die durch einen Fehler bzw. eine nicht vorhandene Größe bedingt sein kann, wird eine entsprechende Meldung auf dem Bildschirm erzeugt, während zugleich die Störung im Fehlerspeicher registriert wird, dessen Inhalt auf die oben erläuterte Weise ausgelesen und auf dem Bildschirm dargestellt werden kann.

Die obigen Maßnahmen sind vorzugsweise Teil eines Anwenderprogramms im Automatisierungsgerät. Es ist auch möglich, den Inhalt eines Fehlerspeichers über eine Schnittstelle an einen übergeordneten Rechner zu übertragen. Zu den registrierten Fehlern im Fehlerspeicher ist die Zeit und die Dauer der jeweiligen Störung vermerkt. Der Inhalt des Fehlers wird im übergeordneten Rechner mit Klartextkommentaren ausgewertet und auf einem Bildschirm dargestellt.

Licentia Patent-Verwaltungs-GmbH

Theodor-Stern-Kai 1

D-6000 Frankfurt 70


P 36 06 518.8-32


Verfahren zur Erfassung und Meldung von Fehlern und Ursachen für
Störungen im Ablauf von durch Automatisierungsmittel
gesteuerten oder geregelten Prozessen


Patentansprüche


1. Verfahren zur Fehlererkennung und Fehlerdiagnose bei durch
speicherprogrammierbare Automatisierungsmittel gesteuerten oder
geregelten Prozessen, die aus nacheinander ablaufenden Schritten bestehen, die von Ausgabegrößen der Automatisierungsmittel
weiterschaltbar sind, wobei einerseits Ausgangsgrößen des Prozesses je über einen Eingang in einen Signalspeicher des jeweiligen Automatisierungsmittels eingegeben werden und andererseits
die Ausgabegrößen je über Signalspeicher und einen nachgeschalteten Ausgang dem Prozeß zugeführt werden,
dadurch gekennzeichnet,
daß den Eingängen und Ausgängen des jeweiligen Automatisierungsmittels auf die Ausgangsgrößen und die Eingabegrößen bezogene
Adressen zugeordnet sind, daß in einem Speicher für die Ausgabegrößen Anweisungen zur Booleschen Verknüpfung von Ausgangsgrößen
und gegebenenfalls von im jeweiligen Automatisierungsmittel
erzeugten Größen zu Ausgangsgrößen zusammen mit Angaben über
einen als Tabelle abgelegten Schaltplan und über weitere auf
Ausgangsgrößen und die jeweilige Ausgabegröße bezogenen Informationen abgelegt sind, daß der Ablauf und/oder das Ergebnis der Verknüpfung der Ausgangsgrößen und gegebenenfalls der im Automatisierungsmittel erzeugten Größen mit vorgebbaren Fehlerkriterien vergleichbar sind, daß bei einer Fehlerfeststellung oder einer mit einer Eingabevorrichtung erzeugten Diagnoseanforderung, die auf eine Verknüpfungsoperation bezogen ist, die zuletzt durchgeführte Verknüpfungsoperation unter Abspeicherung des Status der Ausgangsgrößen und der Ausgabegrößen unter Kennzeichnung der fehlerhaften Ausgangsgrößen durchgeführt wird, daß bei fehlerfreiem Ergebnis der Verknüpfungsoperation der Status gelöscht wird und daß bei einem Fehler die Angaben über den Schaltplan und die weiteren, auf die Ausgangsgröße bezogenen Information angezeigt werden.

2. Verfahren nach Anspruch 1,
   dadurch gekennzeichnet,
   daß die Booleschen Verknüpfungen durch Parametrierung aus einem standardisierten Booleschen Verknüpfungsbaustein gebildet sind, der ausgangsseitig eine ODER-Verknüpfung aufweist, der UND-Verknüpfungen vorgeschaltet sind, von denen wenigstens eine eine vorgeschaltete ODER-Verknüpfung aufweist, der weitere UND-Verknüpfungen vorgeschaltet sind.

3. Verfahren nach Anspruch 1 oder 2,
   dadurch gekennzeichnet,
   daß standardisierte Verknüpfungsbausteine für die Ausgabe von Ausgabegrößen und/oder in Schrittketten als Fortschaltlogik vorgesehen sind.

4. Verfahren nach einem der vorhergehenden Ansprüche,
   dadurch gekennzeichnet,
   daß mittels zyklischer Taktketten Größen des jeweiligen Prozesses und des Automatisierungsgeräts auf das Vorhandensein vorgegebener Werte überwacht werden, daß im Falle einer Störung die Taktkette an ihrem der jeweiligen Größe zugeordneten Glied angehalten wird und daß eine entsprechende Meldung erzeugt und

17

die Störung als Fehler in einem Fehlerspeicher registriert wird, dessen auf den Fehler bezogener Inhalt zusammen mit dem Fehler zugeordneten Imformationen bei Abruf auf einen Bildschirm dargestellt werden.

5. Verfahren nach einem der vorhergehenden Ansprüche,
   dadurch gekennzeichnet,
   daß bei einem Fehler durch Betätigung einer Taste einer Tastatur aus dem Fehlerspeicher ein dem gestörten Verknüpfungsbaustein zugeordneter Schaltplan unter Markierung der fehlerhaften Ausgangsgrößen abgerufen und auf dem Bildschirm dargestellt werden.

6. Verfahren nach Anspruch 5,
   dadurch gekennzeichnet,
   daß zu der gestörten Ausgangsgröße eine Zuordnungsliste auf dem Bildschirm einschließlich Kommentaren darstellbar ist.

7. Verfahren nach einem der vorhergehenden Ansprüche,
   dadurch gekennzeichnet,
   daß Verfahrensschritte auf maximal zulässige Ablaufzeiten überwacht werden, bei deren Überschreiten eine entsprechende Meldung auf dem Bildschirm unter gleichzeitiger Speicherung im Fehlerspeicher erzeugt wird.

8. Verfahren nach einem der vorhergehenden Ansprüche,
   dadurch gekennzeichnet,
   daß durch Quittierung auf einer Taste die Meldung eines Fehlers auf dem Bildschirm und im Fehlerspeicher bei einem nur vorübergehenden Fehler gelöscht wird.

9. Verfahren nach einem der vorhergehenden Ansprüche,
   dadurch gekennzeichnet,
   daß Fehler in einem Fehlerspeicher nacheinander in einer Reihenfolge gespeichert werden, von denen die zuletzt eingegebenen zuerst ausgegeben und auf dem Bildschirm dargestellt werden.

18

10. Verfahren nach einem der vorhergehenden Ansprüche,
    dadurch gekennzeichnet,
    daß bei einer Störung einer mit anderen Größen zu einem Verknüpfungsbaustein zu verknüpfenden Größe diese invers angezeigt
    wird, während die störungsfreien Größen normal angezeigt werden.

11. Verfahren nach Anspruch 10,
    dadurch gekennzeichnet,
    daß bei Störung mehrerer zu verknüpfender Größen die gestörten
    Größen durch Tastendruck nacheinander angezeigt werden.

12. Verfahren nach einem der vorhergehenden Ansprüche,
    dadurch gekennzeichnet,
    daß der Inhalt des Fehlerspeichers aus dem Automatisierungsgerät
    in einen übergeordneten Rechner oder in einem Protokolldrucker über-
    tragen wird.

Fortschaltbedingungen

Schritt n

Schritt n + 1

Fig.1

Verriegelungen

Ausgabebaustein

Ausgabebaustein

Prozeß

| U0 | U1 | .... | U9 | P | A | H | VA | VB | V0 | V1 | .... | V9 |

& & .... & ≥1 & & & ≥1 & & ,... &

&

≥1

≥1

&

≥1

5,6

Fig. 2

Ruecksetzen                    Schrittbetrieb        Tippen

≥1                                              ≥1        13

9        F = Fortschaltverzoegerung
         S = SChrittfreigabe

F   S

&            Zeit  ≥1   ≥1   Verknuepfungslogik
P00S00
                        &                    11

Fig.3

10                              F   S

&            Zeit  ≥1   ≥1   Verknuepfungslogik
P00Snn
                        &                    12

&

Interpreter

14

19

15

16

16a

16b

S00
S01
S02
:
Snn

17

E1  A1  E2  A2  —  —  —  En  Am

**Fig. 4**

18

17A2
32ER
32E04

~F102

20

D16

ST-MA:CO2

ST-MA:CO4

**Fig. 5**

X1:1      :5      :6

~S1V      ~S1R